# EUROPÄISCHE PATENTSCHRIFT

(11) **EP 0 479 840 B1**
(45) Veröffentlichungstag und Bekanntmachung des Hinweises auf die Patenterteilung: **30.08.1995**
(21) Anmeldenummer: 90909653.9
(22) Anmeldetag: 20.06.1990
(51) Int. Cl.: C25B 11/02, C25B 9/00

(54) **ELEKTROLYSEZELLE FÜR GASENTWICKELNDE ELEKTROLYTISCHE PROZESSE**
ELECTROLYTIC CELL FOR ELECTROLYTIC PROCESSES IN WHICH GAS IS EVOLVED
CELLULE ELECTROLYTIQUE POUR PROCESSUS ELECTROLYTIQUES DEGAGEANT DU GAZ

(30) Priorität: 23.06.1989 DD 329901; 23.06.1989 DD 329902; 23.06.1989 DD 329903; 23.06.1989 DD 329904; 23.06.1989 DD 329905
(43) Veröffentlichungstag der Anmeldung: 15.04.1992
(73) Patentinhaber: WENSKE, Hanno, D-04668 Grimma (DE); GALLIEN, Arnold, D-96450 Coburg (DE); HANKE, Wolfgang, D-04703 Leisnig (DE); LAMPE, Wolfgang, D-04668 Grimma (DE); Illgen, Lothar, Dr., D-01239 Dresden (DE)
(72) Erfinder: WENSKE, Hanno, D-04668 Grimma (DE); GALLIEN, Arnold, D-96450 Coburg (DE); HANKE, Wolfgang, D-04703 Leisnig (DE); LAMPE, Wolfgang, D-04668 Grimma (DE); Illgen, Lothar, Dr., D-01239 Dresden (DE)
(74) Vertreter: Maikowski, Michael, Dipl.-Ing. Dr.
(86) Internationale Anmeldenummer: EP9000972
(87) Internationale Veröffentlichungsnummer: WO9100379

(56) Entgegenhaltungen:
- FR-A- 2 244 836
- FR-A- 2 308 701
- GB-A- 128 436
- US-A- 4 097 346

## Beschreibung

Die Erfindung betrifft eine Elektrolysezelle für gasentwickelnde elektrolytische Prozesse, insbesondere für Wasser- und Chloralkalielektrolyse, unter Verwendung von mindestens einer Elektrode mit parallel angeordneten, Anode und Kathode bildenden Elektrodenelementen.

Für die Produktion verschiedener wichtiger chemischer Grundstoffe, wie Natronlauge, Chlor, Wasserstoff oder Wasserstoffperoxid, sind gasentwickelnde elektrolytische Prozesse von herausragender Bedeutung. Die bei der Elektrolyse von alkalischen Lösungen, Wasser, Salz- bzw. Schwefelsäure zu verwendenden Elektroden, sowohl Anoden als auch Kathoden, müssen einer Vielzahl von zum Teil gegensätzlich wirkenden Gebrauchsparametern entsprechen. Ein sehr wesentliches Erfordernis besteht in der schnellen Abfuhr des entwickelten Gases aus dem Raum zwischen Anode und Kathode, um einen großen, den elektrischen Widerstand des Elektrolyten erhöhenden Gasanteil zu vermeiden. Dies steht aber dem Bestreben entgegen, die zur Verfügung stehende Konstruktionsfläche maximal für eine elektrochemisch wirkende Elektrodenfläche wirksam zu nutzen.

Es wird weiterhin angestrebt, eine möglichst gleichmäßig und fein strukturierte Elektrodenoberfläche zu realisieren, damit die Voraussetzungen für ein homogenes elektrisches Feld gegeben sind. Unstetigkeiten, wie z.B. Kanten, führen zu Feldstärkeerhöhungen und damit zu einer ungleichmäßigen Elektrodenbelastung, die nicht nur energetische Verluste, sondern auch einen vorzeitigen Verschleiß des Elektrodenmaterials bzw. der der elektrokatalytischen Beschichtung (Coating) verursacht.

Zur Trennung der an den Elektroden gebildeten Gase verwendet man Membranen oder Diaphragmen. Diese Trennelemente besitzen einen verhältnismäßig großen ohmschen Widerstand, so daß die Gastrennung durch einen hohen energetischen Aufwand erkauft wird.

Wesentlich für die Gewährleistung eines optimalen Prozesses ist auch die Realisierung eines gleichmäßigen, geringen Elektrodenabstandes, ohne bei Verwendung von Membranen diese mechanisch stark zu beanspruchen oder gar zu beschädigen. Es sollte auch vermieden werden, daß Elektrodenelemente mit großer Dicke einen hohen Berührungsdruck auf die Membran ausüben und somit den Elektrolytfluß bzw. den Ionentransport durch das Porensystem der Membran merklich behindern.

Zwei wichtige Grundtypen gasentwickelnder metallischer Elektroden sind bekannt: Zum einen verwendet man von Stromverteilern getragene, parallel angeordnete Profilstäbe, deren Querschnitte kreisförmig, elliptisch, tropfenförmig oder rechteckig sind (DE-OS 30 08 116, DE-OS 33 25 187, DE-PS 35 19 272, DE-OS 35 19 573). Aber auch U-förmige in Abständen aneinandergereihte Schienen sind gemäß der DE-AS 12 71 093 bekannt.

Zum anderen sind perforierte Bleche mit vertikal und horizontal verlaufenden Schlitzen, mit bezüglich der Elektrodenebene abgewinkelten oder tiefgezogenen Segmenten, Lochblechelektroden und Gitterstreckmetallelektroden bekannt (DD-PS 250 026, DE-OS 36 25 506, DE-OS 27 35 238).

Vertreter des erstgenannten Grundtyps verwenden parallel angeordnete Elektrodenelemente, die mit Stromverteilerschienen fest verbunden sind und einen tropfenförmigen Querschnitt (DE-OS 33 25 187) bzw. einen annähernd kreisförmigen Querschnitt (DE-OS 30 08 116) aufweisen. Der kreisförmige Querschnitt wurde durch Abtrennen von Segmenten, die in der Elektrodenebene liegen, modifiziert. Beide Elektroden sollen vorzugsweise für die Chloralkalielektrolyse in Amalgamzellen Anwendung finden. Diese Elektroden weisen keinen wesentlich verringerten Gasblasenbedeckungsgrad auf. Der Abtransport des Gases erfolgt ausschließlich durch die Fluidströmung und den Auftrieb. Die besonderen Querschnittsgeometrien sind nicht geeignet, eine aktive Rolle beim Gastransport durch die Elektrode zu übernehmen. Zwar verhindern sie durch Vermeidung von Unstetigkeitsstellen eine Überbeanspruchung der katalytischen Beschichtung, jedoch geschieht dies durch Inkaufnahme der Nachteile infolge der radiusbedingten ungleichmäßigen Abstände der Elektrodenflächen.

Die DE-OS 35 19 272 zeigt eine Elektrodenstruktur, die eine Vielzahl parallel angeordneter Elektrodenelemente mit rechteckigem Querschnitt verwendet. Ein plattenförmiger Träger mit beidseitigen Ausbuchtungen dient der Befestigung der Elektrodenelemente und als Stromverteiler. Der Querschnitt der rechteckigen Elektrodenelemente soll ein Verhältnis von 1:5 aufweisen. Damit die Gasabzugsfahnen im Bereich des Spaltes nicht miteinander in Berührung kommen und verwirbeln, ist ein relativ großer Spalt zwischen benachbarten Elektrodenelementen vorgesehen. Dies führt zu einer relativ geringen Ausnutzung der zur Verfügung stehenden Konstruktionsfläche und zu einer ungleichmäßigen Elektrodenbelastung, insbesondere im Bereich der Kanten der rechteckigen Profile, wo mit einem erhöhten Verschleiß der katalytischen Beschichtung zu rechnen ist. Die gewählte Form des Trägers der Elektrodenelemente, der gleichzeitig Stromverteiler ist, verhindert die Konzentration des Gases im Raum jenseits der reaktiven Elektrodenfläche. Infolgedessen kommt es zu einem hohen Gasanteil im Bereich der Reaktionsfläche verbunden mit erhöhten elektrischen Verlusten.

Der vorstehend beschriebenen Elektrodenstruktur sehr ähnlich ist die in der DE-OS 35 19 573 offenbarte Elektrode. Sie besteht gleichfalls aus parallel auf einem Stromverteiler angeordneten Elektrodenelementen rechteckigen Querschnitts, deren Abstand zueinander einige Millimeter beträgt. Außerdem weisen die der Membran zugewandten Stirnseiten der Elektrodenelemente eine Vielzahl von Ausnehmungen auf. Die dazwischen befindlichen Stege sind nicht elektrokatalytisch beschichtet und liegen auf der Membran auf. Somit beträgt die zur Verfügung stehende reaktive Fläche nur noch etwa 10 % der Membranfläche. Die Stege können, bedingt durch Relativbewegungen zwischen Elektrode und Membran, lokale Beschädigungen der Membran verursachen.

Auch die FR-A-2 244 836 beschreibt eine offene Elektrodenstruktur unter Verwendung einer Vielzahl von Elektrodenelementen mit rechteckigem Querschnitt bzw. U-förmigem Profil, die auf einem Rahmen angeordnet sind und zusammen eine Elektrode bilden.

Eine Elektrolysezelle mit sehr fein strukturierten Elektroden beschreibt die GB-A-128 436. Sie besteht aus einer Vielzahl dünner Metallstreifen, die mit ihren Oberflächen eng zueinander angeordnet sind. Die Metallstreifen sind an der der Reaktionsseite abgekehrten Kante gefalzt, wobei die Falze sich gegenseitig überlappen und so einen festen und geschlossenen Hintergrund bilden. Diese Rückwand ist mit Querträgern verbunden, welche zur Montage und Stromzuführung dienen.

Große spezifische Oberflächen sind aber auch mit massiven Elektrodenstrukturen erreichbar. So beschreibt FR 2 308 701 einen sich selbst tragenden Elektrodenverband aus zwei unterschiedlich porösen Schichten, bei dem der Stofftransport im wesentlichen quer zur Elektrodenebene erfolgt.

Aufgabe der Erfindung ist die Entwicklung einer Elektrolysezelle für gasentwickelnde elektrolytische Prozesse, die die Nachteile bekannter Einrichtungen vermeidet.

Erfindungsgemäß wird die Aufgabe dadurch gelöst, daß die folienartigen, kapillar beabstandeten Elektrodenelemente Profilierungen zum Fixieren der Kapillarspalten aufweisen, wobei die Kapillarspalten orthogonal zur Elektrodenebene für den Stofftransport im wesentlichen durchgängig sind.

Durch die erfindungsgemäße Lösung wird ein schneller Abtransport des gebildeten Gases von der Reaktionsfläche in den sich jenseits anschließenden Entgasungsraum sowie ein intensiver Elektrolytaustausch gewährleistet. Die Profilierungen fixieren in einfacher Art und Weise den Kapillarspalt dauerhaft und sicher, wodurch sich die Elektrode mit vergleichsweise geringem Aufwand herstellen läßt.

Von der Erfindung umfaßt werden sollen auch Elektrolysezellen, die aus Elektrodenstrukturen mit quasiparallelen, einen Kapillarspalt bildenden Elektrodenelementen aufgebaut sind, wie dies beispielsweise für eine spiralförmig gewickelte Elektrode zutrifft.

Die Dicke der einzelnen Elektrodenelemente beträgt höchstens 450 mm, vorzugsweise bis zum dreifachen des mittleren Blasenablösedurchmessers, um einen möglichst frühzeitigen Abtransport der Gasblasen von der Reaktionsfläche zu gewährleisten.

Als Blasenablösedurchmesser gilt der Durchmesser einer sich von ihrem Bildungskeim entfernenden Blase unter den gegebenen realen Prozeßbedingungen an einer Elektrode der erfindungsgemäßen Bauart. Als eine sich von ihrem Bildungskeim entfernende Blase soll auch diejenige angesehen werden, die sich infolge der Adhäsion auf der Elektrodenoberfläche bewegt.

Die Ablösedurchmesser der Gasblasen hängen in an sich bekannter Weise von der Art der Elektrolyse und den Prozeßbedingungen in erheblichem Maße ab. Laut "Electrochimica Acta" Vol. 33 No. 6.pp 769 bis 779 / 1988 sind unter üblichen Elektrolysebedingungen folgende Blasendurchmesser zu erwarten:

| | |
|---|---|
| für Wasserstoff | ca. 8 »m |
| für Sauerstoff | ca. 17 »m |
| für Chlor | ca. 110 »m |

Eine Elektrolysezelle gemäß Anspruch 1 gewährleistet, daß die Kapillarwirkung der Elektrode, ausgehend von dem Bereich zwischen den Elektrodenelementen, auch die auf den zumeist abgerundeten Stirnflächen gebildeten Blasen beieinflußt und selbst dann in den Kapillarspalt hinein saugt, wenn zwischen der Elektrode und der Membran ein Abstand belassen wurde. Die Breite der Elektrodenelemente ist wesentlich größer als deren Dicke und beträgt mindestens das Zehnfache der Breite des Kapillarspaltes. Dadurch wird in der Elektrode ein zweidimensional wirkendes kapillares System geschaffen, das das Eintragen von Turbulenzen aus dem Entgasungsraum des Elektrolyten in den Reaktionsraum zwischen der Elektrode und der Membran verhindert. Eine Beeinflussung bzw. Störung des Blasenbildungsprozesses und des Blasentransportes in den Kapillarspalt ist damit ausgeschlossen. Der Gastransport durch die Elektrode erfolgt gerichtet, im wesentlichen quer zur Elektrodenebene über die nur sehr geringe Strecke entsprechend der Breite der Elektrodenelemente. Ursache hierfür ist die erhebliche relative Volumenvergrößerung im Reaktionsraum infolge des Blasenbildungsprozesses. Dies führt dort zu einer Druckerhöhung und Verdrängungsreaktion. In gleichem Maße, wie das Gas aus dem Reaktionsraum und der Elektrode gedrängt wird, strömt Elektrolyt durch den Kapillarspalt turbulenzfrei zu den reaktiven Flächen der Elektrode nach. Der hohe Elektrolytaustausch verhindert die ionische Verarmung des Elektrolyten auch in seiner Grenzschicht, da der Flüssigkeitstransport aufgrund der Kapillarkräfte unmittelbar auf der Elektrodenoberfläche erfolgt. Die charakteristischen Strömungsbedingungen im Kapillarspalt verhindern weitestgehend eine vertikale Bewegung der Gasblasen.

Zur Realisierung des Prinzips der erfindungsgemäßen Elektrolysezelle bieten sich zwei Varianten von Elektroden als besonders vorteilhaft an. So ermöglicht das wechselseitige Falten von flächigem Endlosmaterial ein ökonomisches Herstellen von Kapillarspaltelektroden, wobei zuvor zweckmäßigerweise alle vorgesehenen Arbeitsgänge, wie Perforieren, Profilieren und Beschichten im Durchlaufverfahren absolviert werden. Diese Perforationen im Bereich der Faltkanten sind zweckmäßigerweise gleichmäßig verteilt. Zum Fixieren des Kapillarspaltes weisen die Elektrodenelemente Profilierungen auf. Bewährt haben sich solche, die eine stegartige und quer zur Elektrodenebene verlaufende Struktur besitzen; auch noppen- oder warzenartige Profilierungen haben sich als brauchbar erwiesen. Aber auch das Stapeln von erfindungsgemäß profilierten Elektrodenelementen ist geeignet, Kapillarspaltelektroden herzustellen. Die im Urformungsprozeß oder durch nachträgliches Verformen erzeugten Profilierungen fixieren den Kapillarspalt und machen separate Abstandshalter überflüssig.

Die untere Grenze der Dicke der Elektrodenelemente wird lediglich durch die Verarbeitbarkeit, die mechanische Stabilität und die Handhabbarkeit des Materials, also letztlich auch von der Materialart bestimmt.

Um die Vorteile der neuartigen Elektrolysezelle voll ausnutzen zu können, ist es vorteilhaft, die die Elektrode seitlich begrenzenden Elektrodenelemente sowie den unteren Abschluß der Elektrode zur inneren Wandung des Zellengehäuses bis auf höchstens einen dem Kapillarspalt entsprechenden Spalt abzudichten. Außerdem sind die Entgasungsräume im oberen Zellenbereich durch eine Abschottung, die mindestens bis zum niedrigsten möglicherweise auftretenden Flüssigkeitsspiegel des Elektrolyten im Reaktionsraum reicht, gasdicht abgeschlossen. Eine Vermischung der in den Entgasungsräumen der Elektrolysezelle aufsteigenden Gase wird hierdurch verhindert.

Bei der Verwendung einer solchen Zellenkonstruktion für die Wasserelektrolyse, also einem Prozeß, der keine Trennung von Anolyt und Katholyt erfordert, kann sich die Anwendung eines Gastrennsystems, wie z.B. eines Diaphragmas, erübrigen bzw. den Einsatz eines vergleichsweise großporigen, gegebenenfalls nur noch den Elektrodenabstand fixierenden Elementes mit vernachlässigbarem ohmschen Widerstand gestattet.

Um ein Koagulieren von Gasblasen zu verhindern, die an entgegengesetzt gepolten Elektroden entstehen, ist zwischen den Elektroden mindestens ein dem dreifachen Blasenablösedurchmesser entsprechender Abstand vorzusehen. Dieses Merkmal wirkt einer Verunreinigung der in den Entgasungsräumen aufsteigenden Gasblasen sowie der Mischgasbildung im Reaktionsraum durch Koagulation von Gasblasen entgegen.

Eine vorteilhafte Variante der Erfindung für den Gebrauch in der Wasserelektrolyse, also mit identischem Anolyt und Katholyt, verwendet zwischen Anode und Kathode ein dielektrisches, elektrolytbeständiges Distanzelement, das insbesondere die Struktur eines Netzes, von Waben oder großmaschigem Gewebe aufweisen kann. Das Distanzelement garantiert entsprechend seiner Dicke die kurzschlußsichere Fixierung von Anode und Kathode in geringem Abstand. Die hohe Flexibilität der mechanisch stark belastbaren Elektrodenstruktur gewährleistet einen allseitig gleichmäßigen Elektrodenabstand. Darüber hinaus wird der Reaktionsraum vom Distanzelement in eine Vielzahl von kleinen Reaktionszellen unterteilt. Strömungsbedingte Störungen und die Bildung von Mischgas können praktisch nicht mehr auftreten.

Vorteile der Elektroden aus erfindungsgemäßen Elektrodenelementen mit Kapillarspaltanordnung:
Sehr geringe Gasblasenbelastung des Elektrolyten im Reaktionsraum durch einen gerichteten Gasblasentransport innerhalb der Kapillarspaltelektrode
Gleichmäßig- und feinstrukturierter, gas- und flüssigkeitsdurchlässiger Elektrodenaufbau hoher Packungsdichte
dadurch: gleichmäßige Strombelastung und Auslastung der zur Verfügung stehenden Reaktionsfläche, keine lokale Erosion der Elektrodenoberfläche, insbesondere der elektrokatalytischen Beschichtung
Mechanisch belastbare, aber dennoch flexible und somit anschmiegsame Elektrodenstruktur; keine hohen Anforderungen hinsichtlich Ebenheit, Verwerfung u.ä.

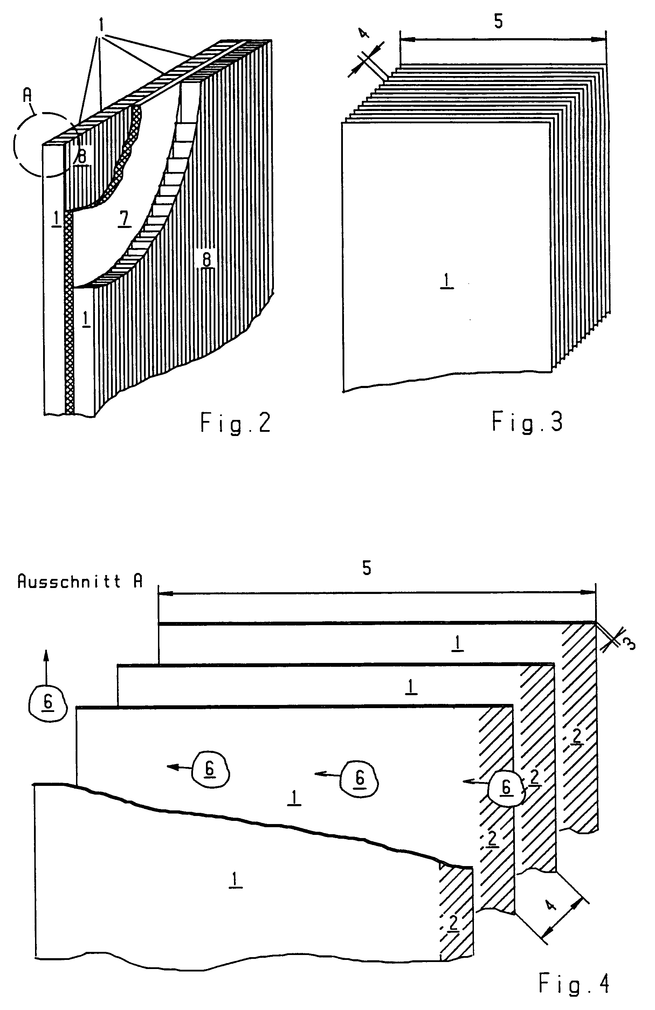

Nachfolgend werden Ausführungsbeispiele der Erfindung, insbesondere der Elektrodenelemente anhand der Figuren näher erläutert. Es stellen dar:
Figur 1:
   Querschnitt einer erfindungsgemäßen Elektrolysezelle mit Kapillarspaltelektroden
Figur 2:
   Perspektivische Detaildarstellung zweier Kapillarspaltelektroden als Kathode und Anode mit zwischenliegendem Trennelement
Figur 3:
   Vergrößerter Ausschnitt A der Figur 2 (M: ca. 10:1)
Figur 4:
   Vergrößerter Ausschnitt A der Figur 2 (M: ca. 20:1)
Figur 5:
   Elektrodenwickelelement in Schnittdarstellung
Figur 6:
   Querschnitt einer Kapillarspaltelektrode, bestehend aus einer Vielzahl von Elektrodenwickelelementen
Figur 7:
   Vergrößerte perspektivische Darstellung von Elektrodenelementen mit welliger Struktur (M: ca. 10:1)
Figur 8:
   Teil einer realen Kapillarspaltelektrode (M: ca. 10:1) aus einem wechselseitig gefalteten, folienartigen Material in vergrößerter perspektivischer Darstellung
Figur 9:
   Vergrößerter Ausschnitt B der Kapillarspaltelektrode von Figur 8
Figur 10:
   Vergrößerte perspektivische Darstellung eines Elektrodenelementes mit horizontal verlaufenden stegartigen Profilierungen (einseitig)
Figur 11:
   Vergrößerte perspektivische Darstellung eines Elektrodenelementes mit im wesentlichen horizontal verlaufenden stegartigen Profilierungen (beidseitig)
Figur 12:
   Vergrößerte perspektivische Darstellung eines Elektrodenelementes mit lokalen (richtungsindifferenten, noppenartigen) Profilierungen
Figur 13:
   Ausschnitt einer Elektrode aus alternierend angeordneten, gewellten und unprofilierten Elektrodenelementen
Figur 14:
   Vergrößerte perspektivische Darstellung eines Elektrodenelementes mit beidseitig angeordneten Sicken
Figur 15:
   Vergrößerte perspektivische Darstellung eines Elektrodenelementes mit einseitig angeordneten Sicken
Figur 16:
   Perspektivische Detaildarstellung zweier Kapillarspaltelektroden als Kathode und Anode mit zwischenliegendem Distanzelement (M: ca. 1:1)

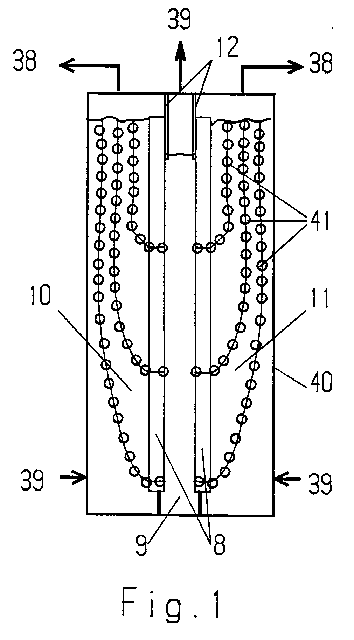

Aus Gründen der Übersichtlichkeit sind in den Figuren 2 bis 16 nur die Elektrodenelemente bzw. die daraus gebildeten Elektroden dargestellt, die in eine Elektrolysezelle eingesetzt werden. Wie aus den Figuren 1 bis 8 und 16 ersichtlich, ist die Elektrode aus zueinander parallel bzw. quasiparallel angeordneten Elektrodenelementen 1, 1a, 28, 29 aufgebaut, deren Dicke 3 und Abstand 4 zueinander um ein bis zwei Größenordnungen geringer sind als bei bekannten Elektroden.

Erfindungsgemäß beträgt die Dicke 3 der in den Figuren 2 bis 16 dargestellten Elektrodenelemente 1, 1a, 1b, 1c, 1d, 15, 16, 28, 29, 30, 31, die Bänder, Folien oder Lamellen sein können, höchstens das dreifache des mittleren Blasenablösedurchmessers. Zwischen den Elektrodenelementen 1, 1a, 1b, 1c, 1d, 15, 16, 28, 29, 30, 31 ist ein den Kapillareffekt hervorrufender Spalt 4 vorgesehen. Die Fixierung der Elektrodenelemente zueinander kann beispielsweise durch mehrere die Elektrodenelemente durchdringende Drähte erfolgen. Zwischen den Elektrodenelementen können auf den Drähten Abstandshalter zur Gewährleistung des Kapillarspaltes angeordnet sein. Vorteilhafter ist die Verwendung von profilierten Elektrodenelementen 1, 1a, 1b, 1c, 1d, 15, 16, 28, 29, 30, 31. Diese Maßnahmen erlauben die einfache Bereitstellung einer in ihrer Breite leicht anpaßbaren, transportablen und montierbaren Kapillarspaltelektrode.

Besonders wirtschaftlich ist die Herstellung von Elektrodenelementen aus glasmetallischen Folienbändern, die nach dem Schmelzspinnverfahren erzeugt wurden. Sie besitzen glatte Oberflächen und Kanten und weisen meistens eine Dicke 3 von 20 »m bis 100 »m auf. Der bevorzugte Bereich der Elektrodenelementendicke liegt um 40 »m; die Breite der Bänder beträgt ca. 5 mm. Bei Verwendung von ca. 40 Elektrodenelmenten je Zentimeter stellt sich ein durchschnittlicher Kapillarspalt 4 von 200 »m Breite ein. Eine Elektrode aus einer Vielzahl an sich sehr flexibler Einzelelemente stellt in Form einer dichten Packung ein mechanisch hochbelastbares und dennoch an eine ebene Fläche vollständig anschmiegbares Gebilde dar. An diese Flächen müssen keine hohen Anforderungen hinsichtlich Ebenheit, Verwerfung u.ä. gestellt werden.

Figur 2 zeigt zwei Elektroden 8 aus Elektrodenelementen 1, davon bildet eine die Kathode und die andere die Anode mit zwischenliegendem Trennelement 7, wie z.B. einer Membran, im sogenannten Null-Abstand. Die Elektrodenstruktur erlaubt großflächig einen konstanten und geringen Elektrodenabstand, welcher der Dicke des Trennelements 7 entspricht. Die Anschmiegsamkeit der Elektrode 8 gewährleistet darüber hinaus eine gleichmäßige Druckverteilung über das Trennelement 7, was nicht nur dessen Beschädigung verhindert, sondern auch den Ionenstrom bzw. den Elektrolytstrom nicht beeinträchtigt. Die Räume, die sich an die Elektrodenflächen anschließen, welche dem Trennelement 7 abgewandt sind, dienen als Entgasungsräume für den Elektrolyten.

Figur 3 und 4 zeigen vergrößert den Ausschnitt A der Elektrode 8 von Figur 1. Die verwendeten Elektrodenelemente 1 besitzen eine Dicke 3 von ca. 30 »m und eine Breite 5 von ca. 5 mm. Der Kapillarspalt 4 zwischen den Elektrodenelementen 1 entspricht etwa 200 »m. Die Flächen 2 der Elektrodenelemente 1 (siehe Fig. 4) stellen die Bereiche mit hoher elektrolytischer Reaktivität dar. Ihr flächenspezifischer Umsatz entspricht ungefähr dem auf den Stirnflächen der Elektrodenelemente 1. Diese reaktionsstarken, am Umsatz wesentlich beteiligten Flächen 2 erstrecken sich quer zur Elektrodenebene auf einer Tiefe, die etwa der Breite des Spaltes 4 entspricht. Zur besseren Darstellbarkeit wurde die Breite des Spaltes 4 im Vergleich zur Dicke und Breite der Elektrodenelemente 1 auf das 3fache gestreckt.

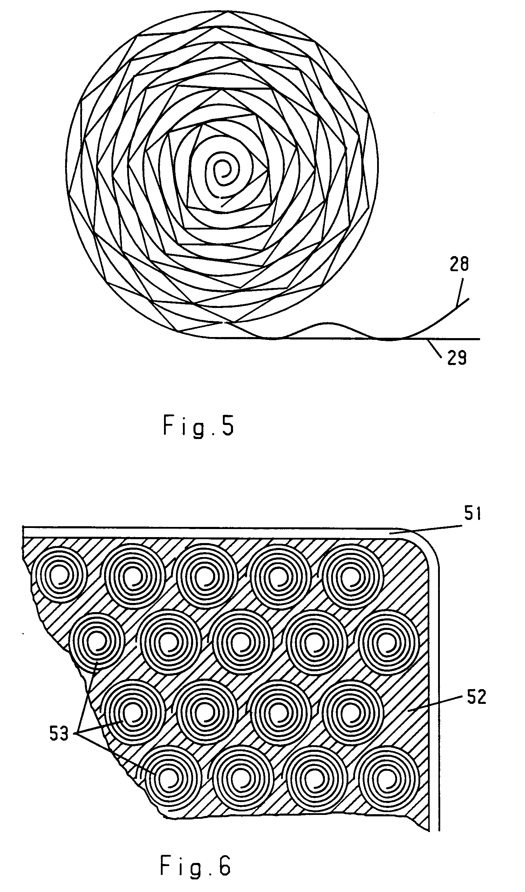

Figur 5 stellt eine weitere Variante einer gleichwirkenden Elektrodenstruktur mit Kapillarspalt dar. Durch das spiralförmige Aufwickeln eines Elektrodenelementepaares, bestehend aus einem glatten Elektrodenelement 29 und einem wellig profilierten Elektrodenelement 28, entsteht eine quasiparallele Elektrodenstruktur. Das Fixieren des gewünschten Kapillarspaltes kann auch durch andersartig profilierte Elektrodenelmente erfolgen, was an späterer Stelle noch erläutert werden wird.

Einen aus einer Vielzahl von Elektrodenwickelelementen 53 bestehender Elektrodenausschnitt zeigt Figur 6. Diese Elektrode ist von einer Stromzuführung 51 eingefaßt. Getragen werden die Elektrodenwickelelemente 53 von einem Stromverteiler 52. Als Stromverteiler 52 können beliebige elektrisch hinreichend leitfähige und mechanisch belastbare Konstruktionen verwendet werden. Im einfachsten Fall kann man eine metallische Lochplatte verwenden.

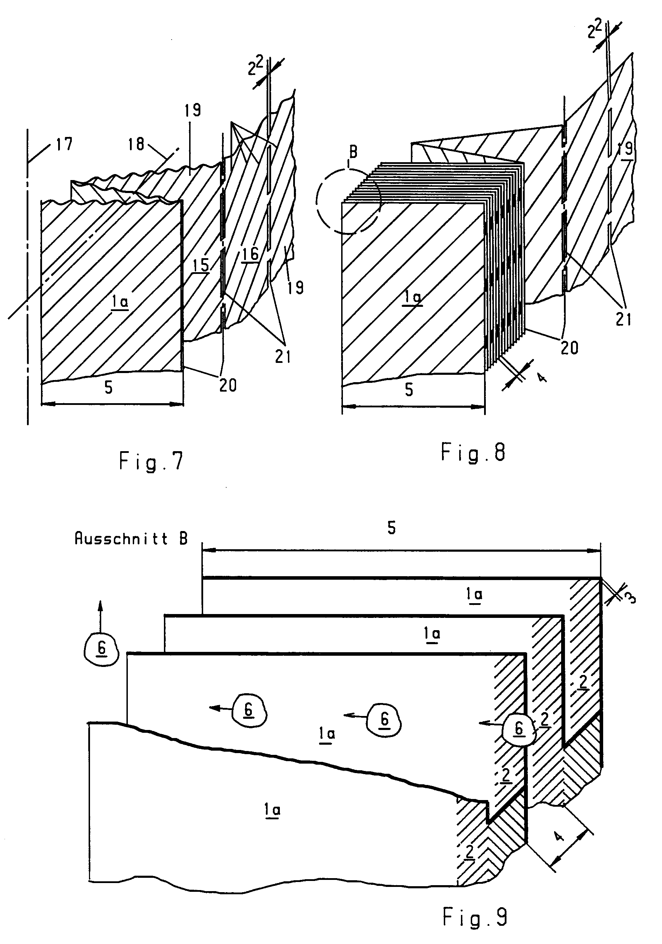

In Figur 7 sind Elektrodenelemente 1a mit gewellter Struktur dargestellt. Die Achsen 18 ihrer Profilierungen sind gegenüber der Horizontalen geneigt. Durch wechselseitiges Falten einer derart profilierten Folie 19 um ihre in der vertikalen Achse 17 liegenden Faltachsen 20, kommen die Profilierungen benachbarter Elektrodenelmente 15, 16 punktweise aufeinander zu liegen. Die in der Faltachse 20 angeordneten Perforierungen 21 besitzen eine Breite 22, die sich an der Breite des Kapillarspaltes 4 bzw. den Grad der Verformung der Folie 19 orientiert.

Figuren 8 und 9 zeigen Ausschnitte einer solchen Elektrode. Die verwendete Folie besitzt eine Dicke 3 von ca. 25 »m; die durch wechselseitiges Falten der profilierten Folie 19 erzeugten Elektrodenelemente 1a haben eine Breite 5 von ca. 5 mm und fixieren die Breite des Spaltes 4 bei etwa 200 »m. Die Flächen 2 der Elemente 1a stellen wieder die Bereiche hoher elektrolytischer Aktivität dar. Elektroden, die durch Perforieren, Profilieren und Falten hergestellt werden, sind rationell zu fertigen, gut handhabbar und besitzen eine sehr gleichmäßige feingliedrige Struktur.

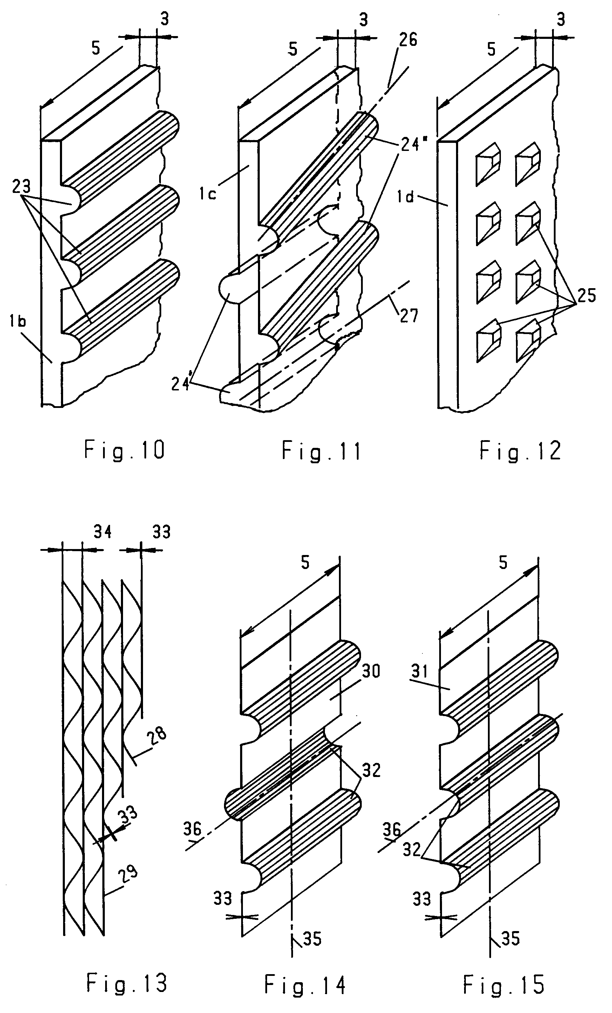

Während das in Figur 10 abgebildete Elektrodenelement 1b horizontal verlaufende stegartige Profilierungen 23 auf nur einer Seite besitzt, sind auf dem Elektrodenelement 1c gemäß Figur 11 stegartige Profilierungen 24', 24'' beidseitig angeordnet. Die Profilierungen 24' mit der Achse 26 der einen Seite verlaufen zu den Profilierungen 24'' mit der Achse 27 der anderen Seite desselben Elektrodenelementes 1c nicht parallel. Dadurch ist es möglich, den Kapillarspalt zwischen benachbarten Elektrodenelementen 1c zu verdoppeln. Wenn Elektrodenelemente 1c gemäß Figur 11 gestapelt werden besitzen die sich kreuzenden Profilierungen 24' ,24'' Punktberührung. Es ist aber auch eine wechselweise Anordnung von beidseitig profilierten Elektrodenelementen 1 c mit glatten, unprofilierten Elektrodenelementen möglich.

Figur 12 zeigt richtungsindifferente, noppenartige Profilierungen 25 auf einer Seite des Elektrodenelementes 1d. Es ist aber auch möglich, auf beiden Seiten des Elektrodenelementes 1d Profilierungen 25 vorzusehen.

Die Erzeugung der Profilierungen 23, 24', 24'', 25 kann gemäß den Figuren 10 bis 12 durch Prägewerkzeuge erfolgen. Besonders wirtschaftlich ist die Herstellung von Elektrodenelementen 1b, 1c, 1d nach dem Schmelzspinnverfahren zu glasmetallischen Folienbändern. Sie besitzen meistens eine Dicke 3 von 20 »m bis 100 »m und können in der gewünschten Breite gefertigt werden. Zur Erzeugung der Profilierungen 23, 24', 24'', 25 wird die Oberfläche der Walze entsprechend präpariert.

Figur 13 zeigt den Querschnitt eines Teils einer Elektrode, die aus einer Packung mit alternierend angeordneten profilierten und nichtprofilierten Elektrodenelementen 28,29 besteht. Die Profilierungen des Elektrodenelementes 28 weisen eine wellige Struktur auf, welche einen sich stetig verändernden Kapillarspalt verursacht. Als mittlere Kapillarspaltbreite kann der halbe Abstand 34 zwischen zwei benachbarten nichtprofilierten Elektrodenelementen 29 angesehen werden. Die Verwendung dieser Packung erlaubt wegen der federnden Wirkung der gewellten Elektrodenelemente 28 eine sehr einfache Variation der Breite des Kapillarspaltes 4. Es lassen sich also mit ein und der selben Profilierung Elektroden für verschiedene elektrolytische Prozesse herstellen.

Die Figuren 14 und 15 zeigen Elektrodenelemente 30,31 mit beidseitig bzw. einseitig gesickten Profilierungen 32, deren Achsen 36 orthogonal zu den Längsachsen 35 der Elektrodenelemente 30,31 verlaufen. Das Elektrodenelement 30 ist in dieser Form in Kombination mit nichtprofilierten Elektrodenelementen 1,29 einsetzbar. Eine Kombination dieser Elektrodenelemente 30 mit gegenüber der Horizontalen geneigten Achsen 36 der gesickten Profilierungen 32 untereinander führt zu Elektrodenstrukturen, die denen von Figur 7 und 8 sehr ähnlich sind.

Die Vorteile der Elektrodenelemente bestehen darin, daß sich diese ohne separate Abstandshalter zu dichten, fein und gleichmäßig strukturierten Packungen zusammenfügen lassen. Der Kapillarspalt zwischen benachbarten Elektrodenelementen, fixiert durch ihre Profilierungen, gewährleistet einen gerichteten Gastransport und einen intensiven Elektrolytaustausch.

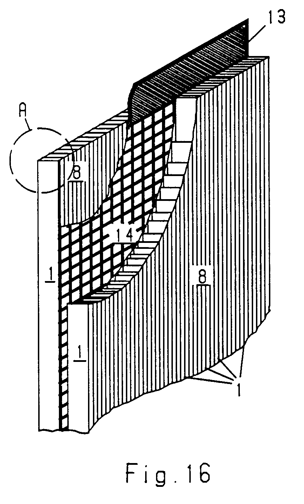

Figur 16 zeigt zwei Elektroden 8, wovon die eine als Anode und die andere als Kathode dient, mit zwischenliegendem großmaschigen Distanzelement 14. Die Elektrodenstruktur erlaubt großflächig einen konstanten und geringen Elektrodenabstand, welcher der Dicke des Distanzelementes 14 entspricht. Außerdem gewährleistet die Anschmiegsamkeit dieser Elektrodenstruktur, daß eine Beschädigung des Distanzelementes 14 verhindert wird. Die Elektroden 8 bestehen aus Elektrodenelementen 1. Die Abschottung 13 trennt die Gase im oberen Bereich des Zellengehäuses 40.

In Figur 1 ist der prinzipielle Aufbau einer Elektrolysezelle dargestellt. Sie besitzt Elektroden 8, die aus erfindungsgemäßen Elektrodenelementen gebildet sind. Zur deutlicheren Darstellung der Gasblasenverteilung ist der Weg der Gasblasen vereinfacht in Form von Perlenschnüren 41 aufgezeigt und die Elektrolysezelle besitzt einen verhältnismäßig großen Elektrodenabstand sowie breite Entgasungsräume 10, 11. Eine der wesentlichsten Voraussetzungen für das Funktionieren der erfindungsgemäßen Elektrolysezelle sind die aus erfindungsgemäßen Elektrodenelementen gebildeten Elektroden 8.

Durch die Pfeile in Figur 1 werden angedeutet:
die Elektrolytzufuhr 37,
die Gasabfuhr 38 und
die Mischgasabfuhr 39.

Die Verbindungen zwischen dem Reaktionsraum 9 und den Entgasungsräumen 10,11 sind höchstens von der Größe eines Kapillarspaltes; besser ist eine vollständige Abdichtung zwischen diesen Räumen, so daß durch den Elektrolyttransport zwischen den Elektroden 8 und dem Zellengehäuse 40 keine strömungsbedingten Störungen auftreten können, die möglicherweise zum Ablösen von Gasblasen 6 von der Elektrodenreaktionsfläche in den Reaktionsraum 9 hinein führen würden.

Damit steht ein Zellenaufbau zur Verfügung, der die Elektrolysezelle in einen gemeinsamen Reaktionsraum 9 und getrennte Entgasungsräume 9,10 hydraulisch unterteilt.

Von der Qualität der Elektroden hängt maßgeblich die Reinheit der erzeugten Gase ab. Auch der Elektrodenabstand kann sich auf die Reinheit der Gase auswirken. Um ein Koagulieren von Gasblasen zu verhindern, muß zwischen den Elektroden 8 ein Abstand von mindestens dem dreifachen des Blasenablösedurchmessers bestehen. Die Koagulation von Gasblasen führt zur Mischgasbildung im Reaktionsraum 9.

Dennoch sollte auf einen möglichst geringen Elektrodenabstand orientiert werden, da er den ohmschen Widerstand verringert. Der Elektrolytaustausch zwischen den Entgasungsräumen 10,11 und dem Reaktionsraum 9 ist umso intensiver, je kleiner (schmaler) der Reaktionsraum 9 (Elektrodenabstand ist.

Gasblasen 6, die sich dennoch von der Elektrode 8 entfernen und in den Reaktionsraum 9 hinein wandern, führen zu der schon erwähnten unbedeutenden Mischgasbildung. Diese Blasen können nicht zur Verunreinigung des Reingases führen, da sie noch vor dem Erreichen der Gegenelektrode mit den dort gebildeten Blasen koagulieren würden. Ihr Blasendurchmesser wäre dann für den Transport durch einen Kapillarspalt 4 der Elektrode 8 oder im Abdichtungsbereich zur Gehäusewand zu groß. Die Trennung der Reingase im oberen Zellenbereich erfolgt durch eine oder mehrere Abschottungen 12, die unter den Flüssigkeitsspiegel abgetaucht sind.

Eine optimale Funktionsweise der Elektrode 8 ist dann gegeben, wenn ihre Struktur feingliedrig und gleichmäßig ist. Solche Eigenschaften werden am besten durch dicht gepackte und gleichmäßig profilierte Elektrodenelemente 1, 1a, 1b, 1c, 1d, 28, 29, 30, 31 erreicht.

Die mit einer Elektrode aus erfindungsgemäßen Elektrodenelementen ausgerüstete Elektrolysezelle wirkt wie folgt:

Die große Anzahl der Elektrodenelemente 1, 1a, 1b, 1c, 1d, 28, 29, 30, 31 der Elektrode 8 (ca. 40 bis 50 Elektrodenelemente je cm) stellt eine hochgradige Vergleichmäßigung der Elektrodenoberfläche dar. Verbunden damit ist eine adäquate Vergleichmäßigung des elektrischen Feldes sowie der Stromdichtebelastung. Folglich wird eine Überlastung und damit frühzeitiger Verschleiß der elektrokatalytischen Beschichtung vermieden. Darüber hinaus ist es gelungen, die an der Reaktion beteiligte Fläche auf einen Wert größer der Konstruktionsfläche zu steigern. Unter günstigen Bedingungen kann das Verhältnis von aktiver Reaktionsfläche zu Konstruktionsfläche um den Wert 2 liegen.

Die an den Stirnflächen und den reaktiven Flächen 2 der Elektrodenelemente 1, 1a, 1b, 1c, 1d, 28, 29, 30, 31 gebildeten Gasblasen befinden sich im Einflußbereich des Kapillarspaltes 4. Infolge der Gasblasenbildung kommt es im Reaktionsraum 9 zu einem Druckaufbau, welcher die Ursache für den Gastransport quer zur Elektrodenebene darstellt. In Figur 4 wird der Weg einer Gasblase 6 durch den Kapillarspalt 4 zwischen den Elektrodenelementen 1 gezeigt. Im gleichen Maße wird der Elektrolyt zwischen Entgasungsraum 10,11 und Reaktionsraum 9 ausgetauscht. Es gibt praktisch kaum noch im Elektrolyten des Reaktionsraumes 9 frei bewegliche Gasblasen. Sie werden unter der Wirkung des Kapillareffektes auf der Elektrodenoberfläche bewegt und in den Kapillar- spalt 4 "gesaugt". Hierdurch wird eine wesentliche Reduzierung des elek- trischen Widerstandes des Elektrolyten erreicht.

Es sei noch darauf hingewiesen, daß die Breite 5 der Elektrodenelemente 1 den Bedürfnissen bezüglich eines möglichst geringen ohmschen Spannungsabfalls im Elektrodenwerkstoff angepaßt werden kann. Gleiches gilt für die Bemessung des Kapillarspaltes 4, um zu ungestörten hydraulischen Bedingungen im Reaktionsraum der Elektrolysezelle zu gelangen.

### Aufstellung der verwendeten Bezugszeichen

- 1 -: Elektrodenelemente (parallel zueinander angeordnet)
- 1a-: Elektrodenelement
- 1b-: Elektrodenelement
- 1c-: Elektrodenelement
- 1d-: Elektrodenelement
- 2 -: Fläche (aktiv)
- 3 -: Dicke eines Elektrodenelements
- 4 -: Kapillarspalt
- 5 -: Breite (Elektrodenelement breite)
- 6 -: Gasblase
- 7 -: Trennelement (z.B. Membran)
- 8 -: Elektrode (Kapillarspaltelektrode)
- 9 -: Reaktionsraum
- 10 -: Entgasungsraum
- 11 -: Entgasungsraum
- 12 -: Abschottung
- 13 -: Abschottung
- 14 -: Distanzelement
- 15 -: Elektrodenelelement
- 16 -: Elektrodenelelement
- 17 -: Längsachse(des Elektrodenelementes)
- 18 -: Achse (der Profilierung)
- 19 -: Folie
- 20 -: Faltkante (bzw. Faltachse)
- 21 -: Perforation
- 22 -: Breite der Perforation
- 23 -: Profilierung
- 24 -: Profilierung
- 25 -: Profilierung
- 26 -: Achse der Profilierung
- 27 -: Achse der Profilierung
- 28 -: Elektrodenelement
- 29 -: Elektrodenelement
- 30 -: Elektrodenelement
- 31 -: Elektrodenelement
- 32 -: Profilierung
- 33 -: Dicke des Elektrodenelements
- 34 -: Abstand
- 35 -: Längsachse (des Elektrodenelements)
- 36 -: Achse (der Profilierung)
- 37 -: Elektrolytzufuhr
- 38 -: Gasabfuhr
- 39 -: Mischgasabfuhr
- 40 -: Zellengehäuse
- 41 -: Perlenschnüre
- 51 -: Stromzuführung
- 52 -: Stromverteiler
- 53 -: Elektrodenwickelelement

## Patentansprüche

1. Elektrolysezelle für gasentwickelnde elektrolytische Prozesse, insbesondere für Wasser- und Chloralkalielektrolyse, unter Verwendung von mindestens einer Elektrode mit parallel angeordneten, Anode und Kathode bildenden folienartigen Elektrodenelementen, die eine Dicke von höchstens 450 Mikrometer aufweisen, wobei zwischen benachbarten Elektrodenelementen kapillare Spalten bestehen,
**dadurch gekennzeichnet**,
daß die Elektrodenelemente (1, 1a, 1b, 1c, 1d, 15, 16, 28, 29, 30, 31) Profilierungen (23, 24, 24'', 25, 32) zum Fixieren der Kapillarspalten (4) aufweisen und daß Kapillarspalten (4) orthogonal zur Elektrodenebene im wesentlichen durchgängig sind, so daß die Bewegungsrichtung der gebildeten Gasblasen gleichfalls im wesentlichen orthogonal von der vorderseitigen Reaktionsfläche der Elektrode zu deren Rückseite erfolgt.

2. Elektrolysezelle nach Anspruch 1, **dadurch gekennzeichnet**, daß die Elektrodenelemente (1, 1a, 1b, 1c, 1d, 15, 16, 28, 29, 30, 31) eine Dicke (3) bis zum dreifachen des mittleren Blasenablösedurchmessers besitzen.

3. Elektrolysezelle nach Anspruch 1, **dadurch gekennzeichnet**, daß die Profilierungen (23, 24, 24'', 32) Materialerhebungen sind.

4. Elektrolysezelle nach Anspruch 1 und/oder 3, **dadurch gekennzeichnet**, daß die Profilierungen (23, 24, 24'', 32) eine stetige und quer zur Elektrodenebene verlaufende Struktur besitzen und insbesondere als Materialwellungen ausgebildet sind.

5. Elektrolysezelle nach Anspruch 1 und/oder 3, **dadurch gekennzeichnet**, daß die Profilierungen (25) noppen- oder warzenartig ausgebildet sind.

6. Elektrolysezelle nach Anspruch 1, **dadurch gekennzeichnet**, daß die Breite (5) der Elektrodenelemente (1, 1a, 1b, 1c, 1d, 15, 16, 28, 29, 30, 31) mindestens das zehnfache der Breite des Kapillarspaltes (4) beträgt.

7. Elektrolyszelle nach Anspruch 1, **dadurch gekennzeichnet**, daß die Elektrodenelemente (28, 29) die Form einer Spirale besitzen.

8. Elektrolysezelle nach Anspruch 1, **dadurch gekennzeichnet**, daß die Elektrodenelemente (1a, 15, 16) Bestandteil eines wechselseitig gefalteten Flächengebildes sind, das im Bereich seiner Faltkanten (20) vorzugsweise gleichmäßig verteilte Perforationen (21) aufweist.

9. Elektrolysezelle nach Anspruch 1, **dadurch gekennzeichnet**, daß die die Elektrode (8) seitlich begrenzenden Elektrodenelemente (1, 1a, 1b, 1c, 1d) sowie der untere Abschluß der Elektrode (8) zur inneren Wandung des Zellengehäuses (40) bis auf höchstens einen den Kapillarspalt (4) zwischen den Elektrodenelementen entsprechenden Spalt abgedichtet und die Entgasungsräume (10, 11) im oberen Zellenbereich durch eine Abschottung (12, 13) mindestens bis zum Flüssigkeitsspiegel des Elektrolyten gasdicht abgetrennt sind.

10. Elektrolysezelle nach Anspruch 1, **dadurch gekennzeichnet**, daß der Abstand zwischen Anode und Kathode durch ein oder mehrere elektrolytbeständige, dielektrische Distanzelemente (14) fixiert ist, die eine Netz-, Waben- oder Gewebestruktur aufweisen.

11. Elektrolysezelle nach Anspruch 1, **dadurch gekennzeichnet**, daß die Elektrodenelemente (1, 1a, 1b, 1c, 1d, 15, 16, 28, 29, 30, 31) aus glasmetallischem Folienband hergestellt sind.

## Claims

1. Electrolysis cell for gas-generating electrolytic processes, more particularly for water and chloroalkali electrolysis, by using at least one electrode with parallel mounted anode- and cathode-forming foil-type electrode elements which have a maximum thickness of 450 micrometers, wherein capillary gaps exist between adjoining electrode elements,
characterised in that the electrode elements (1, 1a, 1b, 1c, 1d, 15, 16, 28, 29, 30, 31) have profiled areas (23, 24, 24'', 25, 32) for fixing the capillary gaps (4) and that capillary gaps (4) are substantially constant orthogonal to the electrode plane so that the direction of movement of the gas bubbles formed is likewise substantially orthogonal from the reaction face on the front side of the electrode to the rear side.

2. Electrolysis cell according to claim 1 characterised in that the electrode elements (1, 1a, 1b, 1c, 1d, 15, 16, 28, 29, 30, 31) have a thickness (3) up to three times the average bubble release diameter.

3. Electrolysis cell according to claim 1 characterised in that the profiled areas (23, 24, 24'', 32) are material protrusions.

4. Electrolysis cell according to claim 1 and/or 3 characterised in that the profiled areas (23, 24, 24'', 32) have a constant structure running across the electrode plane and more particularly are designed as material undulations.

5. Electrolysis cell according to claim 1 and/or 3 characterised in that the profiled areas (25) are like studs or nipples.

6. Electrolysis cell according to claim 1 characterised in that the width (5) of the electrode elements (1,, 1a, 1b, 1c, 1d, 15, 16, 28, 29, 30, 31) amounts to at least ten times the width of the capillary gap (4).

7. Electrolysis cell according to claim 1 characterised in that the electrode elements (28, 29) have the shape of a spiral.

8. Electrolysis cell according to claim 1 characterised in that the electrode elements (1a, 15, 16) are a component part of an alternately folded surface structure which has preferably evenly distributed perforations (21) in the area of its folded edges (20).

9. Electrolysis cell according to claim 1 characterised in that the electrode elements (1, 1a, 1b, 1c, 1d) defining the electrode (8) at the side, as well as the lower closure of the electrode (8) are sealed from the inner wall of the cell housing (40) up to a maximum of one gap corresponding to the capillary gap (4) between the electrode elements, and the degasification chambers (10,11) in the upper cell area are separated gas-tight by a bulkhead (12, 13) at least up to the fluid level of the electrolyte.

10. Electrolysis cell according to claim 1, characterised in that the distance between the anode and cathode is fixed by one or more electrolyte-resistant, dielectric distance elements (14) which have a mesh, honeycomb or woven structure.

11. Electrolysis cell according to claim 1 characterised in that the electrode elements (1, 1a, 1b, 1c, 1d, 15, 16, 28, 29, 30, 31) are made from glass-metal foil strip.

## Revendications

1. Cellule d'électrolyse pour des procédés électrolytiques produisant des gaz, notamment pour une électrolyse à l'eau et à l'alcali et chlore, en utilisant au moins une électrode avec des éléments d'électrode disposés parallèlement, en forme de feuilles, constituant l'anode et la cathode qui ont une épaisseur maximale de 450 micromètres, et entre des éléments d'électrode avoisinants se trouvant des fentes capillaires, caractérisée en ce que les éléments d'électrode (1, 1a, 1b, 1c, 1d, 15, 16, 28, 29, 30, 31) présentent des profilages (23, 24, 24'', 25, 32) pour fixer les fentes capillaires (4), et que les fentes capillaires (4) sont sensiblement traversantes orthogonalement au plan d'électrode de sorte que la direction de mouvement des bulles de gaz formées a lieu également de façon sensiblement orthogonalement de la face de réaction au côté avant de l'électrode vers le côté arrière de celle-ci.

2. Cellule d'électrolyse selon la revendication 1, caractérisée en ce que les éléments d'électrode (1, 1a, 1b, 1c, 1d, 15, 16, 28, 29, 30, 31) ont une épaisseur (3) pouvant atteindre trois fois le diamètre moyen de séparation des bulles.

3. Cellule d'électrolyse selon la revendication 1, caractérisée en ce que les profilages (23, 24, 24'', 32) sont des surélévations de matériau.

4. Cellule d'électrolyse selon la revendication 1 et/ou 3, caractérisée en ce que les profilages (23, 24, 24'', 32) ont une structure continue et s'étendant transversalement au plan d'électrode et sont réalisés notamment sous forme d'ondulations de matériau.

5. Cellule d'électrolyse selon la revendication 1 et/ou 3, caractérisée en ce que les profilages (25) sont réalisés sous forme de tétons ou de boutons.

6. Cellule d'électrolyse selon la revendication 1, caractérisée en ce que la largeur (5) des éléments d'électrode (1, 1a, 1b, 1c, 1d, 15, 16, 28, 29, 30, 31) représente au moins dix fois la largeur de la fente capillaire (4).

7. Cellule d'électrolyse selon la revendication 1, caractérisée en ce que les éléments d'électrode (28, 29) ont la forme d'une spirale.

8. Cellule d'électrolyse selon la revendication 1, caractérisée en ce que les éléments d'électrode (1a, 15, 16) font partie d'une structure de surface pliée alternativement d'un côté à l'autre qui présente au voisinage de ses arêtes de pliage (20) de préférence des perforations (21) réparties uniformément.

9. Cellule d'électrolyse selon la revendication 1, caractérisée en ce que les éléments d'électrode (1, 1a, 1b, 1c, 1d) délimitant latéralement l'électrode (8) ainsi que l'extrémité inférieure de l'électrode (8), par rapport à la paroi intérieure du boîtier de cellule (40) sont rendus étanches en laissant subsister tout au plus une fente correspondant à la fente capillaire (4) entre les éléments d'électrode et que les espaces de dégazage (10, 11) sont séparés de manière étanche au gaz dans la zone supérieure de la cellule par une cloison (12, 13) au moins jusqu'au niveau de liquide de l'électrolyte.

10. Cellule d'électrolyse selon la revendication 1, caractérisée en ce que l'écart entre l'anode et la cathode est fixé par un ou plusieurs éléments d'écartement diélectriques (14) résistant à l'électrolyte qui ont une structure réticulaire, alvéolaire ou texturée.

11. Cellule d'électrolyte selon la revendication 1, caractérisée en ce que les éléments d'électrode (1, 1a, 1b, 1c, 1d, 15, 16, 28, 29, 30, 31) sont fabriqués en une bande de feuille en verre et en métal.
